# FASCICULE DE BREVET EUROPEEN

(11) **EP 1 379 120 B1**
(45) Date de publication et mention de la délivrance du brevet: **26.01.2005**
(21) Numéro de dépôt: 02735452.1
(22) Date de dépôt: 10.04.2002
(51) Int. Cl.: A01G 5/02, A01G 9/10

(54) **PROCEDE ET INSTALLATION POUR INTRODUIRE DIRECTEMENT L'EXTREMITE INFERIEURE D'AU MOINS UN VEGETAL DANS UN SUPPORT DE RECEPTION**
VERFAHREN UND VORRICHTUNG ZUM DIREKTEN EINBRINGEN DER UNTERSEITE MINDESTENS EINER PFLANZE AUF EINEN TRÄGER
METHOD AND INSTALLATION FOR DIRECTLY INSERTING THE LOWER END OF AT LEAST A PLANT IN A RECEIVING SUPPORT

(30) Priorité: 11.04.2001 FR 0104994
(43) Date de publication de la demande: 14.01.2004
(73) Titulaire: Lebreton, Jean-Pierre, 44450 Saint Julien de Concelles (FR); Rangeard, Patrick, F-85700 Pouzauges (FR)
(72) Inventeur: Lebreton, Jean-Pierre, 44450 Saint Julien de Concelles (FR); Rangeard, Patrick, F-85700 Pouzauges (FR)
(74) Mandataire: Le Brusque, Maurice
(86) Numéro de dépôt international: PCT/FR2002/001257
(87) Numéro de publication internationale: WO 2002/082883

(56) Documents cités:
- EP-A1- 0 255 738
- US-A- 5 247 761
- DATABASE WPI Section PQ, Week 199935, Derwent Publications Ltd., London, GB; Class P13, AN 1999-417389, XP002186253 -& NL 1 009 091 C2 (VISSER GRAVENDEEL HOLDING BV) 19 Avril 1999
- DATABASE WPI Section PQ, Week 200024, Derwent Publications Ltd., London, GB; Class P13, AN 2000-280966, XP002186254 -& NL 1 009 464 C2 (HIETKAMP ADVIES BV) 27 Décembre 1999

## Description

La présente invention concerne un procédé et une installation permettant l'introduction directe de l'extrémité inférieure d'au moins un végétal dans un support de réception, genre bloc de mousse florale, motte de terre, récipient du type « biberon », ou autres.

Certaines fleurs ou plantes sont présentées à la vente à l'unité ou en bouquet, associées à un support de réception qui assure leur maintien et qui contient de l'eau ou un milieu nutritif favorisant leur bonne conservation dans le temps.
Les supports de réception correspondants peuvent se présenter sous la forme d'une motte de terre ou de terreau, notamment en pot. On utilise aussi parfois des récipients appelés «biberons», qui contiennent l'eau ou le liquide nutritif de préservation, et dont l'ouverture supérieure est obturée par une membrane souple munie d'un orifice central permettant le passage des tiges des végétaux. On peut encore utiliser des blocs de mousse florale imbibés d'eau ou de liquide nutritif; ces blocs de mousse sont bien souvent cylindriques mais ils peuvent aussi se présenter sous d'autres formes.
Les récipients du type « biberon » ou les blocs de mousse florale sont généralement utilisés pour des fleurs ou des plants à tiges coupées, alors que les substrats terreux assurent la préservation de végétaux en racines.

Jusqu'à présent, les opérations qui consistent à introduire les végétaux concernés dans leur support de réception s'effectuent manuellement. Cependant les différentes manipulations correspondantes sont répétitives ; elles peuvent s'avérer pénibles dans le temps et elles nécessitent une main-d'oeuvre importante.

La présente invention propose un procédé et une installation permettant d'automatiser ces opérations.

Le procédé conforme à la présente invention, pour introduire directement l'extrémité inférieure d'au moins un végétal dans un support de réception consiste :
- à maintenir mécaniquement ledit végétal ou lesdits végétaux regroupés,
- à maintenir mécaniquement ledit support de réception, et
- à déplacer automatiquement de manière relative ledit végétal ou lesdits végétaux regroupés, et ledit support de réception, pour assurer l'introduction de l'extrémité inférieure dudit végétal ou desdits végétaux dans ledit support.
De préférence ce déplacement relatif s'effectue en translation ; et de préférence encore, on maintient en position fixe ledit végétal ou lesdits végétaux regroupés, et on déplace uniquement leur support de réception.

Selon une autre particularité, le procédé conforme à la présente invention consiste :
- à maintenir en position le végétal ou les végétaux regroupés, par appui ou serrage dans une zone qui est située au-dessus de leur longueur d'introduction dans le support de réception,
- à guider l'extrémité inférieure dudit végétal ou desdits végétaux pour assurer leur introduction correcte dans ledit support, ce guidage étant réalisé sur une zone située sur la longueur d'introduction dudit végétal ou desdits végétaux dans ledit support, et
- à escamoter lesdits moyens de guidage après le début de la pénétration dudit végétal ou des végétaux dans ledit support, ou au fur et à mesure de cette pénétration.

Le procédé conforme à la présente invention s'applique en particulier et de préférence aux fleurs, ou plantes à tiges coupées, pour réaliser l'enfoncement de leur extrémité inférieure directement dans le support de réception.

L'installation pour la mise en oeuvre de ce procédé comporte :
- des moyens pour maintenir en position le végétal ou les végétaux regroupés,
- des moyens pour maintenir le support de réception dudit végétal ou desdits végétaux regroupés, et
- des moyens pour déplacer de manière relative ledit végétal ou lesdits végétaux regroupés et ledit support de réception, pour assurer l'introduction de l'extrémité inférieure dudit végétal ou desdits végétaux dans ledit support.

De préférence, l'installation comporte - des moyens pour maintenir le support de réception en regard de l'extrémité inférieure du végétal ou des végétaux regroupés, et - des moyens pour assurer le déplacement relatif en translation dudit végétal ou desdits végétaux regroupés et dudit support de réception.
Toujours de préférence, l'installation comporte des moyens pour maintenir en position fixe le végétal ou les végétaux regroupés, ainsi que des moyens pour déplacer leur support de réception.

Selon une autre caractéristique, les moyens de maintien du végétal ou des végétaux regroupés sont constitués d'un réceptacle horizontal ou sensiblement horizontal associé à un dispositif de pressage escamotable apte à venir bloquer ledit végétal ou lesdits végétaux sur ledit réceptacle.

Selon une autre caractéristique, l'installation comporte des moyens pour guider l'extrémité inférieure du végétal ou des végétaux regroupés, en vue d'assurer leur introduction correcte dans le support de réception. Ces moyens de guidage peuvent se présenter sous la forme de deux fourches en Vé escamotables ; à la place ou en complément de ces deux fourches en Vé, on peut prévoir la présence de moyens de guidage en forme de pince constituée de deux bras articulés.

Toujours selon l'invention, les moyens de maintien du support de réception sont constitués d'une structure support qui permet de positionner ledit support de réception horizontalement ou sensiblement horizontalement, en regard du réceptacle de maintien du végétal ou des végétaux regroupés, laquelle structure support est associée à un poussoir actif en translation pour assurer l'introduction dudit végétal ou desdits végétaux regroupés dans ledit support de réception. De préférence, la structure qui maintient le support de réception des végétaux est mobile en translation parallèlement aux mouvements du poussoir associé.

Selon une caractéristique avantageuse, l'installation comporte des moyens pour assurer l'approvisionnement automatique de cette structure support en support de réception.

Selon une forme de réalisation préférée, l'installation comprend une pluralité de réceptacles horizontaux ou sensiblement horizontaux destinés à recevoir chacun un végétal ou un bouquet de végétaux, lesquels réceptacles sont montés sur un système d'entraînement pas à pas qui assure leur acheminement jusqu'à au moins un poste au niveau duquel sont aménagés les moyens qui permettent l'introduction automatique des végétaux dans leur support de réception.

Dans le cadre d'une installation pour traiter des végétaux à tiges coupées, l'installation comporte des moyens pour sectionner à longueur les tiges des végétaux qui sont disposés dans ou sur leurs réceptacles; les moyens de coupe correspondants sont aménagés en amont du ou des postes assurant l'introduction automatique des végétaux dans leur support de réception.

Bien entendu, les moyens de maintien et de déplacement du support de réception des végétaux sont adaptés selon le type de support de réception utilisé (bloc de mousse florale, motte de substrat terreux, « biberon », ou autres...).

Dans le cas d'une installation adaptée à des « biberons » des moyens particuliers seront adaptés pour assurer l'ouverture automatique de l'orifice central de la membrane souple du biberon, avant l'introduction des végétaux.

Mais l'invention sera encore illustrée, sans être aucunement limitée, par la description suivante de deux modes de réalisations particuliers, donnés uniquement à titre d'exemples et représentés sur les dessins annexés dans lesquels :
- la figure 1 est une vue schématique en perspective d'une installation conforme à la présente invention, permettant l'introduction du pied de végétaux à tiges coupées dans un support de réception en forme de bloc de mousse florale ;
- la figure 2 est une vue en perspective de l'un des réceptacles sur lequel sont déposés les végétaux dans l'installation illustrée sur la figure 1 ;
- les figures 3 à 10 illustrent en différentes étapes le procédé de fonctionnement de l'installation représentée sur la figure 1 ;
- la figure 11 est une vue en élévation d'un bouquet de fleurs et feuillages implanté dans un bloc de mousse florale, résultat du procédé de fonctionnement de l'installation représentée sur les figures 1 à 10 ;
- la figure 12 est une vue de côté d'un bouquet de fleurs et feuillages implanté dans un récipient du type «biberon », le « biberon » étant ici représenté en coupe longitudinale ;
- la figure 13 est une vue schématique d'une autre installation conforme à la présente invention, permettant l'introduction de végétaux à tiges coupées dans un support de réception en forme de « biberon » ;
- les figures 14 à 23 illustrent en différentes étapes le procédé de fonctionnement de l'installation représentée sur la figure 13.

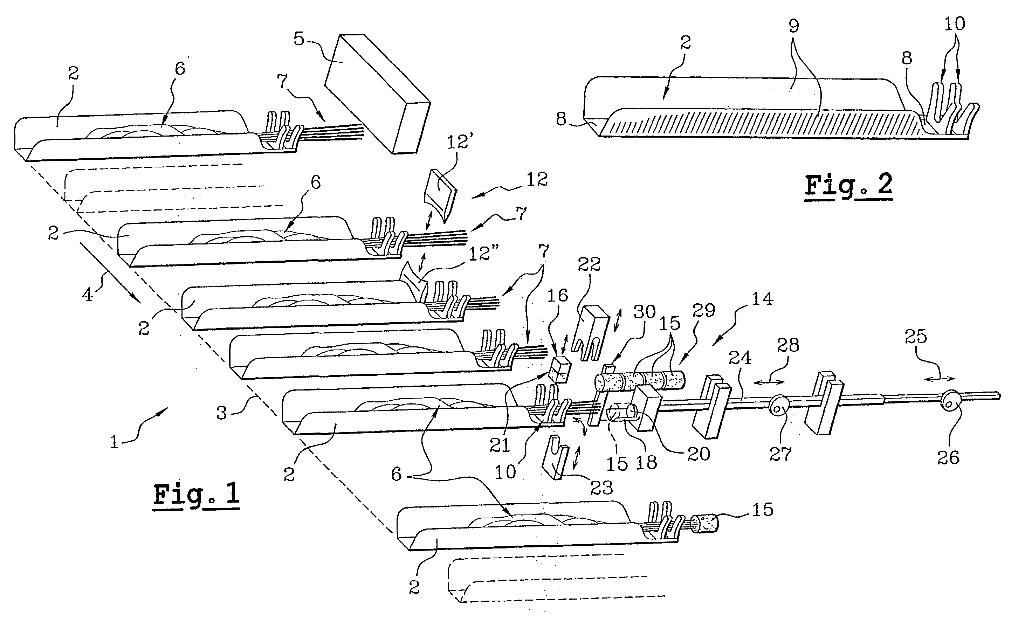

L'installation 1 illustrée sur la figure 1 est adaptée pour assurer l'introduction automatique du pied de végétaux dans un support de réception constitué d'un bloc de mousse florale imbibé d'eau ou de milieu nutritif. Les végétaux en question peuvent être des fleurs, des feuilles/feuillages ou des plants divers.
Cette installation 1 comprend une juxtaposition de réceptacles horizontaux 2 montés sur une chaîne sans fin 3 qui assure leur déplacement selon la flèche d'orientation 4.
La chaîne sans fin 3 passe devant un ou plusieurs postes 5 (représenté(s) schématiquement) au niveau desquels des opérateurs ou opératrices déposent les végétaux 6 dans les réceptacles 2. Comme on peut le voir sur la figure 1, cette dépose est réalisée de telle sorte que les tiges 7 des végétaux 6 fassent saillie de manière sensible sur l'avant desdits réceptacles.
Les végétaux sont regroupés dans chaque réceptacle en fonction de l'aspect esthétique ou décoratif recherché ; si on le désire, un seul végétal peut être déposé dans chaque réceptacle 2.

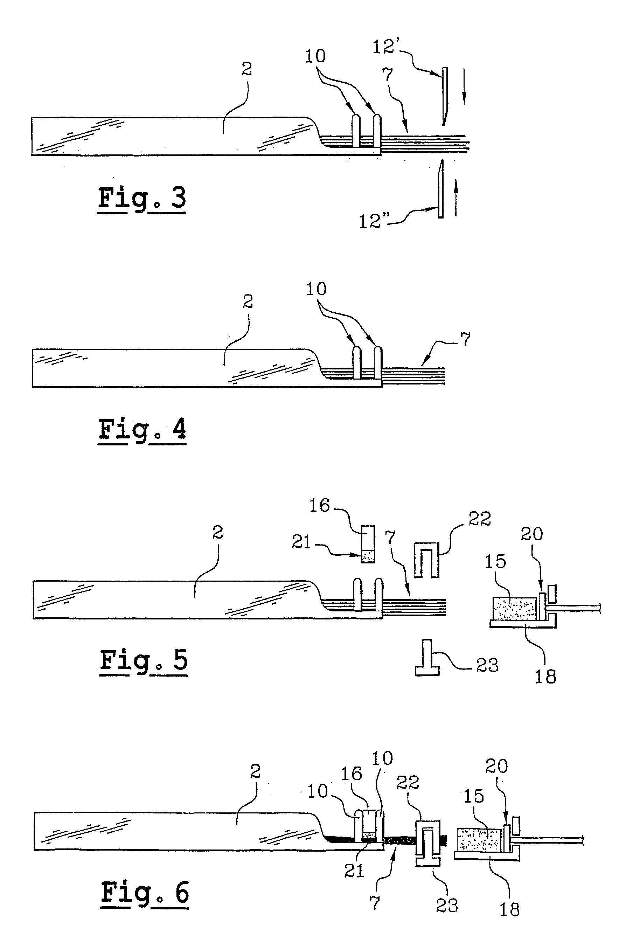

Un réceptacle 2 isolé est représenté sur la figure 2. Ce réceptacle 2 se présente sous la forme d'une goulotte allongée comportant un fond plat horizontal 8 et deux flancs latéraux évasés 9. Au niveau de son extrémité avant, le fond plat 8 est équipé de deux structures fixes 10 en forme de Vé, espacées l'une de l'autre et destinées à assurer un regroupement et un positionnement correct des tiges 7 des végétaux.

En aval du ou des postes de dépose 5, on remarque la présence d'un dispositif 12 assurant la découpe automatique des tiges 7 des végétaux à une longueur déterminée. Dans l'exemple de réalisation illustré, ce dispositif de découpe 12 est constitué de deux lames 12' et 12" qui sont montées de part et d'autre des tiges 7 à sectionner, et qui sont animées d'un mouvement de déplacement vertical inversé.

En aval de ce dispositif de découpe 12, on trouve les moyens 14 qui permettent l'introduction automatique de l'extrémité inférieure des tiges 7 de végétaux dans un bloc cylindrique 15 de mousse florale. Ces moyens 14 sont constitués d'un dispositif de pressage escamotable 16 qui est destiné à venir immobiliser les végétaux 6 dans leur réceptacle 2, et qui est aménagé en regard d'une structure support 18 pour les blocs de mousse 15, laquelle structure support est associée à un poussoir ou piston 20.

Le dispositif de pressage escamotable 16 est agencé pour venir appliquer une pression verticale entre les deux structures en Vé 10 des réceptacles 2 ; sa partie inférieure est équipée d'une pièce de contact 21, en mousse synthétique par exemple, destinée à éviter, ou tout au moins limiter, la détérioration des végétaux lorsque la pression d'immobilisation est appliquée. Cette pression de blocage est appliquée sur une zone des végétaux 6 située au-dessus de leur longueur d'introduction dans le bloc de mousse florale 15.
Dans une variante de réalisation le dispositif de pressage peut suivre les réceptacles 2.

Entre le dispositif de pressage 16 et la structure support 18, on remarque la présence de deux fourches en Vé escamotables, l'une supérieure 22 et l'autre inférieure 23, destinées à guider l'extrémité inférieure des végétaux, en vue d'assurer leur introduction correcte dans le bloc de mousse 15. Dans l'exemple de réalisation illustré, la fourche supérieure 22 est une double fourche entre les deux parties de laquelle peut venir s'intégrer ou s'encastrer la fourche inférieure simple 23. Ce dispositif de guidage 22-23 vient s'appliquer quelques millimètres au-dessus de l'extrémité inférieure des tiges 7, sur une zone située sur la longueur d'introduction des végétaux dans le bloc de mousse 15. On comprend bien que ce dispositif de guidage 22-23 permet le regroupement des tiges 7 et leur positionnement correct en regard du bloc de mousse 15 dans lequel elles vont être introduites.

Dans l'exemple de réalisation illustré, la structure support 18 des blocs de mousse 15 est en forme de portion de cylindre. On peut aussi envisager de remplacer cette portion de cylindre par quelques doigts disposés parallèlement les uns aux autres. Cette structure support 18 est montée sur un châssis 24 qui sert de guide au piston 20 destiné, comme on le verra plus loin, à agir par poussée sur le fond des blocs de mousse 15.

Le piston 20 est guidé en translation parallèlement à l'axe des réceptacles 2 ; ses mouvements, illustrés par la double flèche d'orientation 25, sont commandés par des moyens mécaniques genre came actionnant un galet 26, ou autres.
La structure support 18 et son châssis 24 sont également guidés en translation sur le même axe que l'axe de déplacement du piston 20. Le mouvement correspondant est commandé par une structure mécanique genre came actionnant un galet 27, ou autre ; le déplacement correspondant est illustré par la double flèche d'orientation 28.

Sur la figure 1, un bloc de mousse florale 15, illustré en pointillés, est positionné sur la structure support 18, prêt à être enfoncé par le poussoir 20 sur les tiges 7 des végétaux disposés dans le réceptacle 2 en regard. Juste à côté de la structure support 18 on remarque la présence d'un magasin 29 de stockage des blocs de mousse 15 imbibés d'eau, et la présence de moyens 30 d'alimentation automatique de la structure support 18. Ces moyens d'alimentation automatique consistent en un doigt basculant 30 agissant sur le bloc de mousse 15 situé à l'extrémité de la file de stockage ; cette file de stockage avance d'elle-même au fur et à mesure de la distribution des blocs de mousse, soit par gravité, soit par un système mécanique approprié.
Dans une variante de réalisation simplifiée, l'alimentation en blocs de mousse 15 de la structure support 18 peut être réalisée manuellement.

La chaîne sans fin 3 avance pas à pas en regard des différents éléments mécaniques qui viennent d'être décrits. Pour augmenter les cadences, plusieurs dispositifs de coupe 12 et plusieurs postes 14 d'introduction automatique des blocs de mousse peuvent être juxtaposés.

Les mouvements des différentes pièces mécaniques qui viennent d'être décrites sont commandés par un automate programmable pour fonctionner de la manière détaillée ci-après en relation avec les figures 3 à 10.

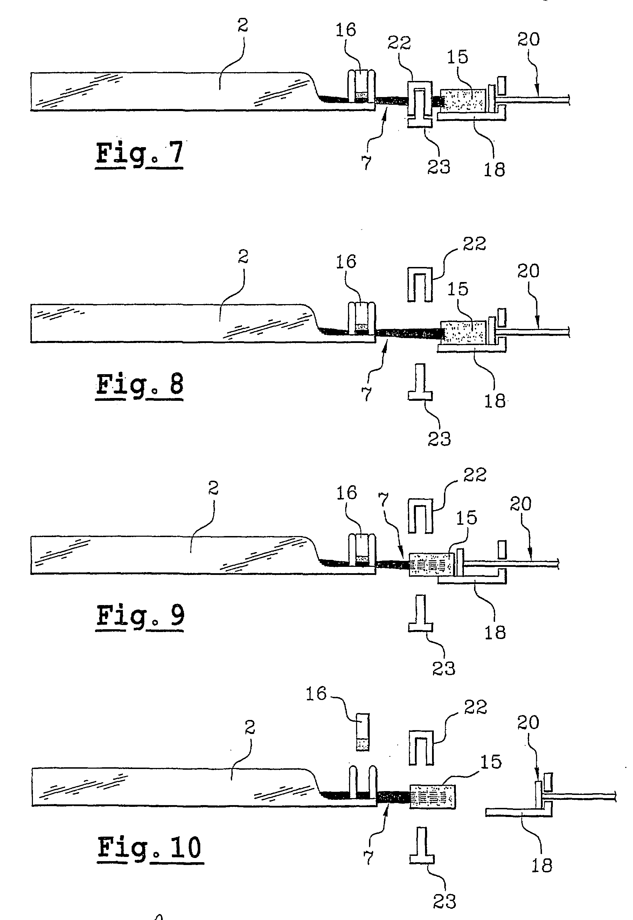

Après que les opérateurs ou opératrices aient correctement disposé le végétal ou les végétaux 6 dans les réceptacles d'accueil 2, les tiges débordantes 7 de ces végétaux sont sectionnées à longueur par les lames de coupe 12', 12" (figures 3 et 4).
Les réceptacles 2 avec les végétaux à tiges coupées parviennent ensuite au niveau du poste d'introduction automatique des blocs de mousse florale 15 (figure 5). Sur cette figure 5, on remarque le dispositif de pressage 16 disposé au-dessus des structures de guidage 10 des réceptacles 2, et les fourches de guidage 22, 23 en position inactive écartées des tiges 7. Le bloc de mousse 15 est disposé sur la structure support 18 associée au poussoir 20, cet ensemble 18, 20 étant placé en retrait par rapport à l'extrémité des tiges 7 de végétaux.
Une fois le réceptacle 2 correctement positionné et immobilisé, le dispositif de pressage 16 est activé (figure 6). Il vient alors se positionner entre les deux Vé de guidage 10 et il vient appuyer sur les végétaux 6, ou sur leurs tiges 7, de manière à les bloquer contre le fond du réceptacle 2. La pression appliquée s'effectue par l'intermédiaire du bloc de mousse 21 aménagé à l'extrémité du pressoir 16, ce qui permet d'éviter la détérioration des végétaux.
Simultanément à l'activation du presseur 16 (ou juste avant, ou juste après), les deux fourches de guidage 22, 23 se rapprochent et s'encastrent l'une dans l'autre pour resserrer entre elles les tiges 7 des végétaux, et pour positionner correctement lesdites tiges 7 en regard du bloc de mousse florale 15. Simultanément à ces opérations de maintien des végétaux (ou juste avant, ou juste après) la structure support 18 et le poussoir 20 se rapprochent du réceptacle 2 en regard, et donc de l'extrémité des tiges de végétaux.
Une fois le dispositif de pressage 16 et les fourches de guidage 22, 23 correctement activés la structure support 18, et le poussoir 20 avancent un peu plus en translation pour faire pénétrer l'extrémité des tiges 7 de végétaux dans le bloc de mousse 15 (figure 7). Cette pénétration est réalisée sur quelques millimètres (par exemple 5 à 7 millimètres).
Ensuite, les deux fourches de guidage 22, 23 sont désactivées (figure 8) et le poussoir 20 poursuit sa translation pour achever la pénétration (figure 9). En fin de course du piston 20, les tiges de végétaux 7 sont introduites dans le bloc de mousse florale 15 sur une longueur de l'ordre 1,5 à 3 cm.
Le dispositif de pressage 16 est alors désactivé (figure 10) et la structure support 18 avec le poussoir 20 se repositionnent en retrait.

Un autre bloc de mousse florale 15 peut automatiquement être disposé sur la structure support 18 en vue de démarrer un nouveau cycle, après qu'un nouveau réceptacle 2 se soit immobilisé en regard.

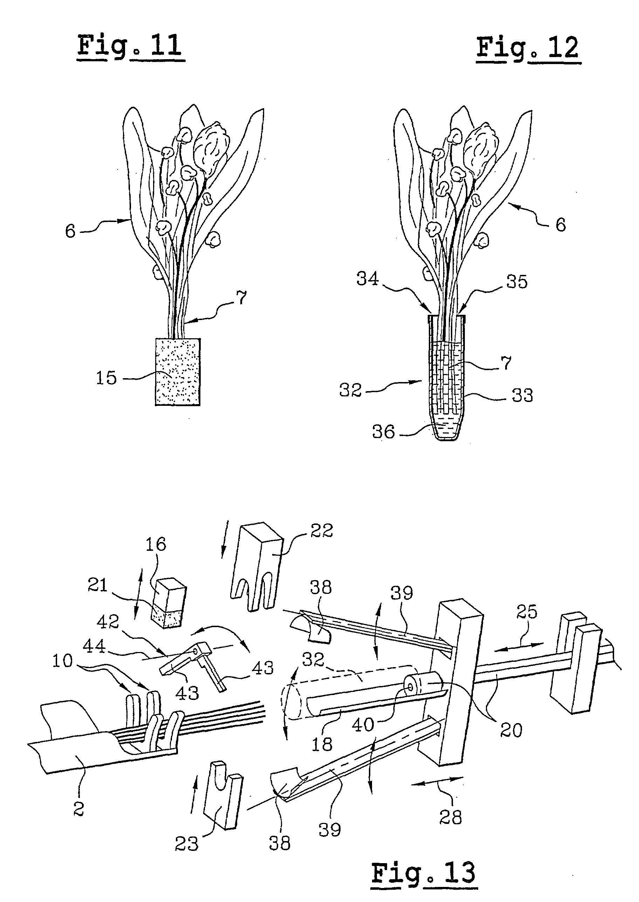

On obtient un végétal ou un bouquet de végétaux implanté dans un bloc de mousse, tel qu'illustré sur la figure 11, qui peut être transféré vers un poste de conditionnement avant sa présentation à la vente.

Le procédé et l'installation qui viennent d'être décrits permettent par des moyens mécaniques relativement simples, l'introduction automatique des tiges de végétaux dans des blocs de mousse florale à des cadences élevées de l'ordre de 800/heure par poste d'implantation.

Une installation fonctionnant selon le même principe peut être envisagée pour assurer l'introduction automatique d'un végétal ou d'un bouquet de végétaux dans un récipient 32 du type « biberon », tel qu'illustré sur la figure 12.
Ce récipient du type « biberon » 32 est constitué d'un contenant 33 dont l'ouverture supérieure est obturée par une membrane souple 34 munie d'un orifice central 35 par lequel passe(nt) la tige du végétal ou les tiges des végétaux.
La membrane souple 34 fait office de moyen de maintien des végétaux 6 et elle limite les possibilités d'échappement du liquide 36 (eau ou milieu nutritif) conditionné dans le contenant 33.

L'installation correspondante est schématisée sur la figure 13.
Sur cette figure 13, on retrouve certains éléments mécaniques qui ont été décrits en relation avec le premier mode de réalisation illustré sur les figures 1 à 10, à savoir : - les réceptacles 2 montés sur leur chaîne d'avancement pas à pas, - le dispositif de pressage 16 avec son bloc de mousse 21, - les deux fourches de guidage 22 et 23, ainsi que - la structure support 18 associée au poussoir 20.
Cette structure support 18 est bien entendu ici adaptée aux supports de réception utilisés, à savoir des récipients du type « biberon » 32.
En outre, le support de réception 18 comporte des moyens adaptés pour permettre l'ouverture de l'orifice 35 de la membrane 34 du « biberon », avant l'introduction des tiges de végétaux. Ces moyens particuliers sont constitués de deux demi-cônes 38 portés par des bras 39 qui sont articulés sur la structure support 18. Ces deux bras 39 sont associés à des moyens mécaniques qui permettent la commande de leur basculement autour de leur axe d'articulation respectif, de manière à prendre une position fermée ou une position ouverte détaillées ci-après.
On notera également la présence d'une ventouse aspirante 40 aménagée à l'extrémité du piston 20, connectée à des moyens de mise en dépression non représentés ; la fonction de cette ventouse 40 sera expliquée plus loin.
D'autre part, étant donné la longueur relativement importante des parties de tiges destinées à être introduites dans les « biberons » 32, des moyens de guidage complémentaires sont interposés entre les deux fourches 22-23 et l'extrémité avant des réceptacles 2. Ces moyens de guidage complémentaires se présentent sous la forme d'une pince 42 constituée de deux bras 43 articulés en 44 autour d'un axe horizontal parallèle à l'axe des réceptacles 2. Ces deux bras pivotants 43 ont la possibilité de se resserrer pour bloquer verticalement les tiges des végétaux.

La structure support 18 peut être alimentée manuellement en « biberons » 32 ; de préférence cependant, on prévoit un système d'alimentation automatique, par exemple similaire à celui utilisé pour les blocs de mousse 15 du mode de réalisation précédent. Comme pour ce mode de réalisation précédent, la structure support 18 et le poussoir 20 sont mobiles en translation selon les flèches d'orientation 28 et 25; la commande des mouvements correspondants peut s'effectuer au moyen de cames, de vérins, ou autres...

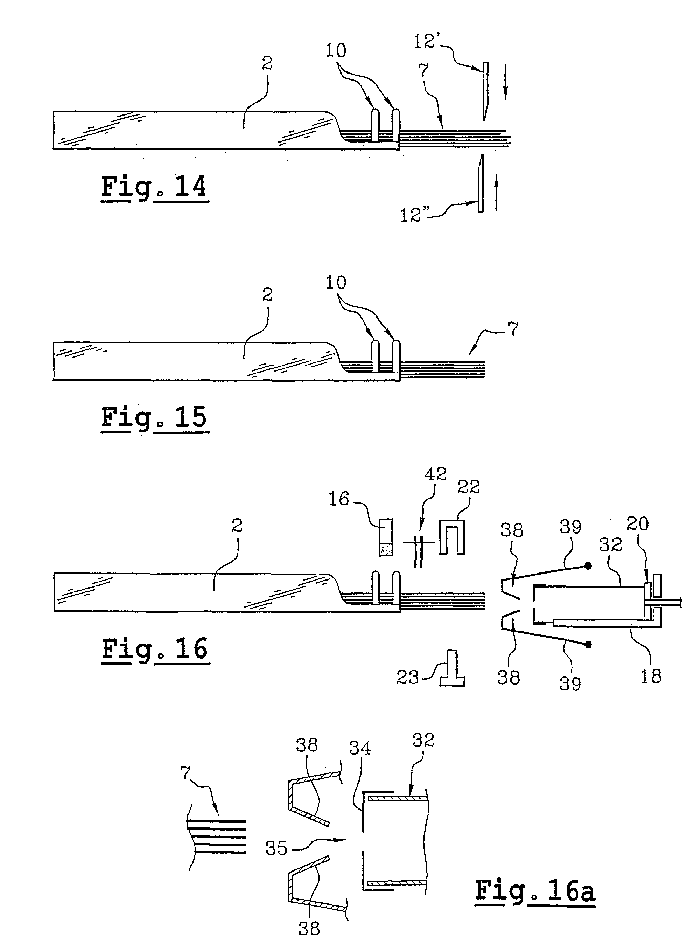

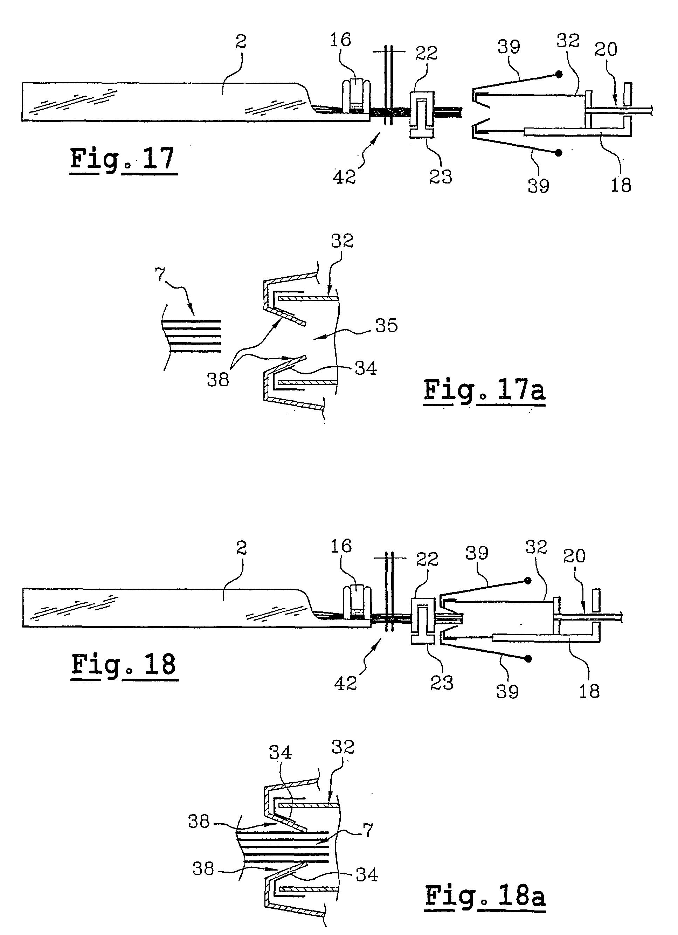

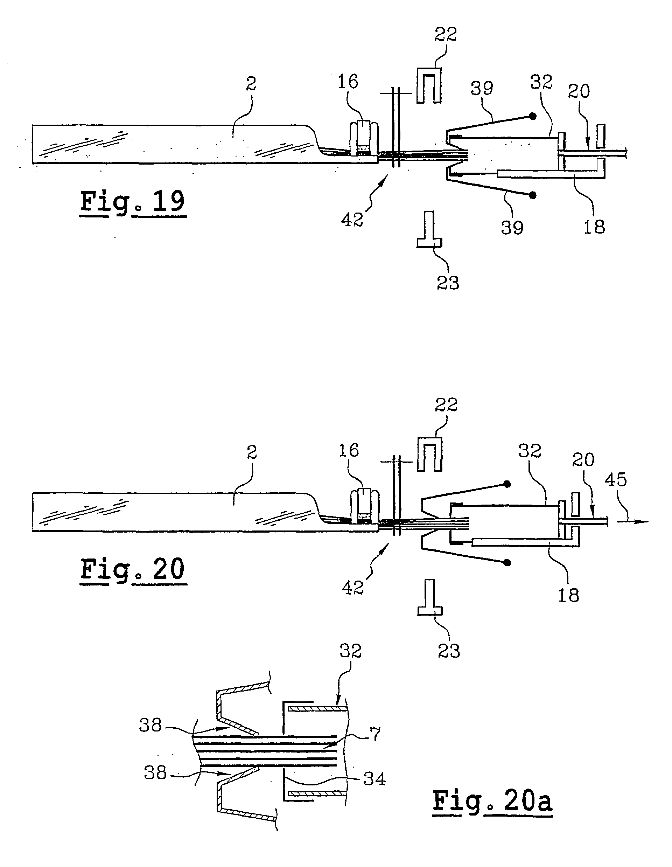

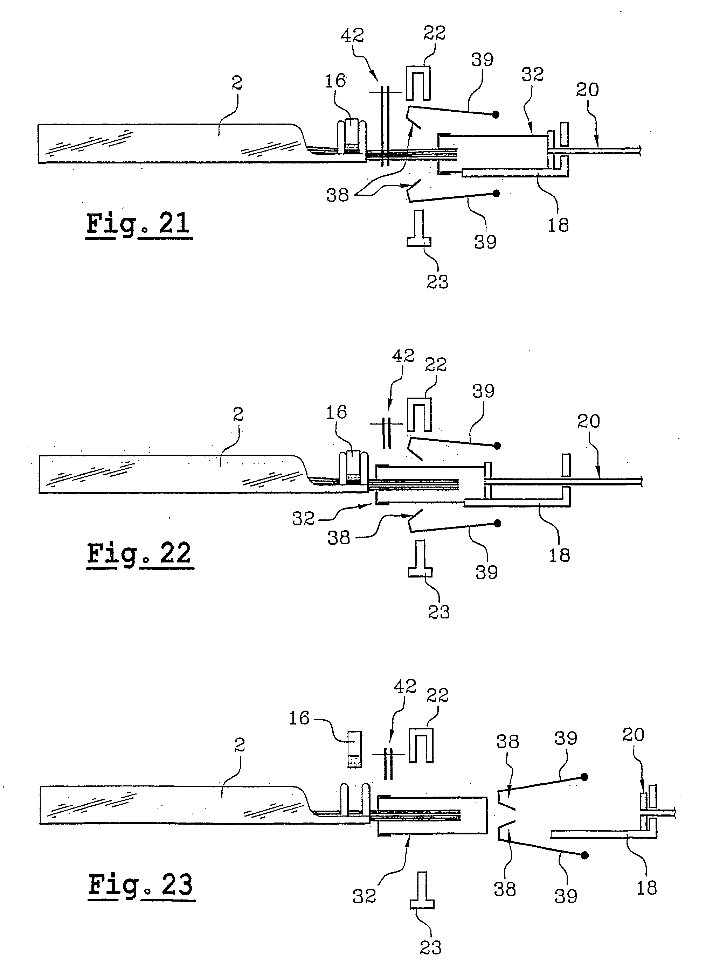

Le fonctionnement de cette installation, géré par un automate programmable, va maintenant être détaillé en relation avec les figures 14 à 23. Comme pour le mode de réalisation précédent, après la dépose des végétaux 6 dans les réceptacles 2, les tiges 7 desdits végétaux sont coupées à longueur par les lames de coupe 12', 12" (figures 14 et 15).
Le végétal ou les végétaux à tige(s) coupée(s) viennent ensuite se positionner au niveau des moyens qui assurent leur introduction automatique dans les supports de réception en forme de « biberons » 32 (figure 16). Sur la figure 16, on remarque le dispositif de pressage 16, ainsi que les systèmes de guidage 22-23 et 42 en position inactive. Le support 18 de « biberon » 32, et le poussoir 20 associé, sont disposés en retrait de l'extrémité inférieure des tiges 7 de végétaux. Les demi-cônes 38 portés par les bras articulés 39 sont placés en position fermée devant le « biberon » 32. La figure 16a illustre de manière agrandie les demi-cônes 38 placés à ce moment entre les tiges 7 de végétaux et l'extrémité avant du « biberon » 32.
Au cours de l'étape suivante illustrée sur la figure 17, on active le dispositif de pressage 16 ainsi que les fourches de guidage 22, 23 et la pince de guidage complémentaire 42, de manière à bloquer et positionner correctement les tiges 7 des végétaux. Simultanément, ou juste avant, ou juste après, le poussoir 20 fait avancer le « biberon » 32 sur son support 18 pour faire pénétrer les demi-cônes 38 dans l'orifice 35 de la membrane souple 34, en vue d'agrandir ledit orifice 35 ; cette opération est illustrée de manière agrandie sur la figure 17a.
La structure support 18 avance ensuite avec le poussoir 20 pour faire pénétrer l'extrémité inférieure des tiges 7 dans le « biberon » 32 (figures 18 et 18a), puis les fourches 22 et 23 qui guident l'extrémité inférieure des tiges 7 sont désactivées (figure 19).
Ensuite, la structure support 18 avance pour dégager les demi-cônes 38 de la membrane 34 du « biberon » 32 (figures 20 et 20a) ; au cours de cette opération le poussoir 20 reste immobile et maintient le « biberon » 32 en position au moyen de sa ventouse aspirante (l'aspiration en question est illustrée par la flèche d'orientation 45).
Juste après, les demi-cônes 38 s'escamotent par basculement des bras 39 autour de leur axe d'articulation (figure 21 ) ; puis le poussoir 20 est activé pour faire avancer le « biberon » 32 de manière à poursuivre l'enfoncement des tiges 7 de végétaux (figure 22) ; la pince de guidage 42 est désactivée pour ne pas gêner cette introduction.
Enfin, le dispositif de pressage 16 est désactivé (figure 23), les demi-cônes 38 sont replacés en position fermée et la structure support 18 avec le poussoir 20 reculent pour se repositionner en retrait des réceptacles 2. Le réceptacle 2 correspondant peut alors avancer pour laisser la place aux suivants en vue du démarrage d'un nouveau cycle.

Les « biberons» 32 peuvent alors être prélevés et remplis d'eau ou de milieu nutritif avant leur conditionnement en vue d'une présentation à la vente.

Comme cela a été précisé pour le premier mode de réalisation, les cadences de cette installation peuvent être augmentées en juxtaposant plusieurs postes d'introduction automatique des végétaux dans les « biberons ».

Une installation similaire à celles des deux de modes de réalisation décrits ci-dessus peut être envisagée pour implanter des végétaux dans des blocs ou mottes de terre (en pots par exemple), les végétaux correspondants ayant des tiges coupées ou étant présentés en racines. Les moyens de maintien des végétaux dans leurs réceptacles 2, ainsi que la structure support 18 associée aux moyens d'introduction automatique seront adaptés en conséquence.

## Revendications

1. Procédé pour introduire directement l'extrémité inférieure d'au moins un végétal (6) dans un support de réception (15, 32), **caractérisé en ce qu'**il consiste :
- à maintenir mécaniquement ledit végétal ou lesdits végétaux regroupés (6),
- à maintenir mécaniquement ledit support de réception (15, 32), et
- à déplacer automatiquement de manière relative ledit végétal ou lesdits végétaux regroupés (6), et ledit support de réception (15, 32), pour assurer l'introduction de l'extrémité inférieure dudit végétal ou desdits végétaux dans ledit support.

2. Procédé selon la revendication 1, **caractérisé en ce qu'**il consiste à maintenir le support de réception (15, 32) en regard de l'extrémité inférieure du végétal ou des végétaux (6), et à effectuer une translation relative entre ledit végétal ou lesdits végétaux (6) et ledit support (15, 32), pour assurer l'introduction dudit végétal ou desdits végétaux dans ledit support.

3. Procédé selon l'une quelconque des revendications 1 ou 2, **caractérisé en ce qu'**il consiste à maintenir en position fixe le végétal ou les végétaux regroupés (6), et à déplacer uniquement le support (15, 32), pour assurer l'introduction dudit végétal ou desdits végétaux dans ledit support.

4. Procédé selon l'une quelconque des revendications 1 à 3, **caractérisé en ce qu'**il consiste :
- à maintenir en position le végétal ou les végétaux regroupés (6), par appui ou serrage sur une zone qui est située au-dessus de leur longueur d'introduction dans le support de réception (15, 32),
- à guider l'extrémité inférieure dudit végétal ou desdits végétaux pour assurer leur introduction correcte dans ledit support, ce guidage étant réalisé sur une zone située sur la longueur d'introduction dudit végétal ou desdits végétaux dans ledit support, et
- à escamoter les moyens de guidage (22-23, 42) après le début de la pénétration dudit végétal ou desdits végétaux dans ledit support, ou au fur et à mesure de cette pénétration.

5. Installation pour la mise en oeuvre du procédé selon l'une quelconque des revendications 1 à 4, **caractérisée en ce qu'**elle comporte :
- des moyens (2, 16) pour maintenir en position le végétal ou les végétaux regroupés (6),
- des moyens (18) pour maintenir le support de réception (15, 32) dudit végétal ou desdits végétaux regroupés (6), et
- des moyens (20, 24, 26, 27) pour déplacer de manière relative ledit végétal ou lesdits végétaux regroupés (6), et ledit support de réception (15, 32), pour assurer l'introduction de l'extrémité inférieure dudit végétal ou desdits végétaux dans ledit support.

6. Installation selon la revendication 5, **caractérisée en ce qu'**elle comporte des moyens (18) pour maintenir le support de réception (15, 32) en regard de l'extrémité inférieure du végétal ou des végétaux regroupés (6), et des moyens (20, 24, 26, 27) pour assurer le déplacement relatif en translation dudit végétal ou desdits végétaux regroupés (6) et dudit support de réception (15, 32).

7. Installation selon l'une quelconque des revendications 5 ou 6, **caractérisée en ce qu'**elle comporte des moyens (2, 16) pour maintenir en position fixe le végétal ou les végétaux regroupés (6), et des moyens (18, 20, 24, 26, 27) pour déplacer leur support de réception (15, 32).

8. Installation selon la revendication 7, **caractérisée en ce que** les moyens de maintien du végétal ou des végétaux regroupés (6) sont constitués d'un réceptacle (2) horizontal ou sensiblement horizontal associé à un dispositif de pressage escamotable (16) apte à venir bloquer ledit végétal ou lesdits végétaux (6) sur ledit réceptacle (2).

9. Installation selon l'une quelconque des revendications 5 à 8, caractérisée en ce quelle comporte des moyens (22-23, 42) pour guider l'extrémité inférieure du végétal ou des végétaux regroupés (6), en vue d'assurer son ou leur introduction correcte dans le support de réception (15, 32).

10. Installation selon la revendication 9, **caractérisée en ce qu'**elle comporte des moyens de guidage en forme de deux fourches en Vé (22, 23) escamotables.

11. Installation selon l'une quelconque des revendications 9 ou 10,
**caractérisée en ce qu'**elle comporte des moyens de guidage en forme de pince (42) constituée de deux bras articulés (41).

12. Installation selon l'une quelconque des revendications 7 à 11, **caractérisée en ce que** les moyens de maintien du support de réception (15, 32) sont constitués d'une structure support (18) qui permet de positionner ledit support de réception (15, 32) horizontalement ou sensiblement horizontalement, en regard du réceptacle (2) de maintien du végétal ou des végétaux regroupés (6), laquelle structure support (18) est associée à un poussoir (20) actif en translation pour assurer l'introduction dudit végétal ou desdits végétaux regroupés (6) dans ledit support de réception (15, 32).

13. Installation selon la revendication 12, **caractérisée en ce que** la structure support (18) du support (15, 32) de réception des végétaux (6) est mobile en translation parallèlement aux mouvements du poussoir (20) associé.

14. Installation selon l'une quelconque des revendications 12 ou 13, **caractérisée en ce qu'**elle compote des moyens (29, 30) pour approvisionner automatiquement la structure support (18) en supports de réception (15, 32).

15. Installation selon l'une quelconque des revendications 5 à 14, **caractérisée en ce qu'**elle comprend :
- une pluralité de réceptacles (2) horizontaux ou sensiblement horizontaux destinés à recevoir chacun un végétal ou un bouquet de végétaux (6), lesquels réceptacles (2) sont montés sur un système d'entraînement pas à pas (3), et
- au moins un poste (14) au niveau duquel sont aménagés les moyens qui permettent l'introduction automatique des végétaux dans leur support de réception (15, 32).

16. Installation selon la revendication 15, **caractérisée en ce qu'**elle comporte des moyens (12) pour couper à longueur les tiges (7) des végétaux (6) disposés dans ou sur leur réceptacle (2), lesquels moyens de coupe (12) sont aménagés en amont du ou des postes (14) assurant l'introduction automatique des végétaux (6) dans leur support de réception (15, 32).

17. Installation selon l'une quelconque des revendications 5 à 16, **caractérisée en ce qu'**elle comporte des moyens pour assurer l'introduction du végétal ou des végétaux regroupés (6) dans un support de réception en forme de bloc de mousse florale (15).

18. Installation selon l'une quelconque des revendications 5 à 16, **caractérisée en ce qu'**elle comporte des moyens pour assurer l'introduction du végétal ou des végétaux regroupés (6) dans un support de réception en forme de bloc ou de motte de terre.

19. Installation selon l'une quelconque des revendications 5 à 16, **caractérisée en ce qu'**elle comporte des moyens pour assurer l'introduction du végétal ou des végétaux regroupés (6) dans un support de réception (32) en forme de contenant (33) dont l'ouverture supérieure est obturée par une membrane souple (34) munie d'un orifice central (35).

20. Installation selon la revendication 19, **caractérisée en ce qu'**elle comporte des moyens (38) adaptés pour ouvrir l'orifice central (35) de la membrane souple (34) du contenant (33), avant l'introduction des tiges (7) de végétaux (6).

## Patentansprüche

1. Verfahren zum direkten Einbringen des unteren Endes von mindestens einer Pflanze (6) in einen Aufnahmeträger (15, 32), **dadurch gekennzeichnet, dass** es darin besteht:
- mechanisches Halten der Pflanze oder der zusammengefassten Pflanzen (6),
- mechanisches Halten des Aufnahmeträgers (15, 32), und
- relatives automatisches Verschieben der Pflanze oder die zusammengefassten Pflanzen (6) und des Aufnahmeträgers (15, 32), um das Einbringen des unteren Endes der Pflanze oder der Pflanzen in den Träger sicherzustellen.

2. Verfahren nach Anspruch 1, **dadurch gekennzeichnet, dass** es darin besteht, den Aufnahmeträger (15, 32) gegenüber dem unteren Ende der Pflanze oder der Pflanzen (6) zu halten und eine relative Translation zwischen der Pflanze oder den Pflanzen (6) und dem Träger (15, 32) durchzuführen, um das Einbringen der Pflanze oder der Pflanzen in den Träger sicherzustellen.

3. Verfahren nach einem der Ansprüche 1 oder 2, **dadurch gekennzeichnet, dass** es darin besteht, die Pflanze oder die zusammengefassten Pflanzen (6) in einer festen Position zu halten und nur den Träger (15, 32) zu verschieben, um das Einbringen der Pflanze oder der Pflanzen in den Träger sicherzustellen.

4. Verfahren nach einem der Ansprüche 1 bis 3, **dadurch gekennzeichnet, dass** es darin besteht:
- Halten der Pflanze oder der zusammengefassten Pflanzen (6) in Position durch Abstützen oder Festklemmen in einer Zone, die sich über ihrer Einbringungslänge in den Aufnahmeträger (15, 32) befindet,
- Führen des unteren Endes der Pflanze oder der Pflanzen, um ihre richtige Einbringung in den Träger sicherzustellen,
wobei dieses Führen auf einer Zone erfolgt, die sich auf der Einbringungslänge der Pflanze oder der Pflanzen in den Träger befindet, und
- Einziehen der Führungsmittel (22-23, 42) nach dem Beginn des Eindringens der Pflanze oder der Pflanzen in den Träger oder in dem Maße dieses Eindringens.

5. Anlage zur Durchführung des Verfahrens nach einem der Ansprüche 1 bis 4, **dadurch gekennzeichnet, dass** sie umfasst:
- Mittel (2, 16) zum Halten der Pflanze oder der zusammengefassten Pflanzen (6) in Position,
- Mittel (18) zum Halten des Aufnahmeträgers (15, 32) der Pflanze oder der zusammengefassten Pflanzen (6), und
- Mittel (20, 24, 26, 27), zum relativen Verschieben der Pflanze oder der zusammengefassten Pflanzen (6) und des Aufnahmetrögers (15, 32), um das Einbringen des unteren Endes der Pflanze oder der Pflanzen in den Träger sicherzustellen.

6. Anlage nach Anspruch 5, **dadurch gekennzeichnet, dass** sie Mittel (18) aufweist, um den Aufnahmeträger (15, 32) gegenüber dem unteren Ende der Pflanze oder der zusammengefassten Pflanzen (6) zu halten, und Mittel (20, 24, 26, 27) aufweist, um die relative Verschiebung der Pflanze oder der zusammengefassten Pflanzen (6) und des Aufnahmeträgers (15, 32) translatorisch sicherzustellen.

7. Anlage nach einem der Ansprüche 5 oder 6, **dadurch gekennzeichnet, dass** sie Mittel (2, 16) aufweist, um die Pflanze oder die zusammengefassten Pflanzen (6) in fester Position zu halten, und Mittel (18, 20, 24, 26, 27) aufweist, um ihren Aufnahmetröger (15, 32) zu verschieben.

8. Anlage nach Anspruch 7, **dadurch gekennzeichnet, dass** die Mittel zum Halten der Pflanze oder der zusammengefassten Pflanzen (6) aus einem horizontalen oder im Wesentlichen horizontalen Behälter (2) gebildet sind, der mit einer einziehbaren Pressvorrichtung (16) verbunden ist, die die Pflanze oder die Pflanzen (6) auf dem Behälter (2) fixieren kann.

9. Anlage nach einem der Ansprüche 5 bis 8, **dadurch gekennzeichnet, dass** sie Mittel (22-23, 42) umfasst, um das untere Ende der Pflanze oder der zusammengefassten Pflanzen (6) zu führen, um ihr richtiges Einbringen in den Aufnahmeträger (15, 32) sicherzustellen.

10. Anlage nach Anspruch 9, **dadurch gekennzeichnet, dass** sie Führungsmittel in Form zweier einziehbarer V-förmiger Gabeln (22, 23) aufweist.

11. Anlage nach einem der Ansprüche 9 oder 10, **dadurch gekennzeichnet, dass** sie Führungsmittel in Form einer Klemme (42) aufweist, die aus zwei Gelenkarmen (41) gebildet ist.

12. Anlage nach einem der Ansprüche 7 bis 11, **dadurch gekennzeichnet, dass** die Haltemittel des Aufnahmeträgers (15, 32) aus einem Trageaufbau (18) gebildet sind, der es ermöglicht, den Aufnahmeträger (15, 32) horizontal oder im Wesentlichen horizontal gegenüber dem Haltebehälter (2) der Pflanze oder der zusammengefassten Pflanzen (6) zu positionieren, wobei dieser Trageaufbau (18) mit einem aktiven Translationsschieber (20) verbunden ist, um das Einbringen der Pflanze oder der zusammengefassten Pflanzen (6) in den Aufnahmeträger (15, 32) sicherzustellen.

13. Anlage nach Anspruch 12, **dadurch gekennzeichnet, dass** der Trageaufbau (18) des Aufnahmeträgers (15, 32) der Pflanzen (6) translatorisch parallel zu den Bewegungen des zugehörigen Schiebers (20) beweglich ist.

14. Anlage nach einem der Ansprüche 12 oder 13, **dadurch gekennzeichnet, dass** sie Mittel (29, 30) aufweist, um den Trageaufbau (18) mit Aufnahmetrögern (15, 32) automatisch zu versorgen.

15. Anlage nach einem der Ansprüche 5 bis 14, **dadurch gekennzeichnet, dass** sie umfasst:
- eine Vielzahl von horizontalen oder im Wesentlichen horizontalen Behältern (2), die dazu bestimmt sind, jeweils eine Pflanze oder ein Bündel von Pflanzen (6) aufzunehmen,
wobei die Behälter (2) auf einem Schrittantriebssystem (3) befestigt sind, und
- mindestens eine Station (14), in deren Bereich die Mittel vorgesehen sind, die das automatische Einbringen der Pflanzen in ihren Aufnahmeträger (15, 32) ermöglichen.

16. Anlage nach Anspruch 15, **dadurch gekennzeichnet, dass** sie Mittel (12) zum Schneiden der Stängel (7) der Pflanzen (6) die in oder auf ihrem Behälter (2) gebracht sind, auf Länge aufweist, wobei die Schneidmittel (12) zuführseitig zu der oder den Stationen (14) angeordnet sind, die das automatische Einbringen der Pflanzen (6) in ihren Aufnahmetröger (15, 32) sicherstellen.

17. Anlage nach einem der Ansprüche 5 bis 16, **dadurch gekennzeichnet, dass** sie Mittel aufweist, um das Einbringen der Pflanze oder der zusammengefassten Pflanzen (6) in einen Aufnahmeträger in Form eines Blumensteckschwammes (15) sicherzustellen.

18. Anlage nach einem der Ansprüche 5 bis 16, **dadurch gekennzeichnet, dass** sie Mittel aufweist, um das Einbringen der Pflanze oder der zusammengefassten Pflanzen (6) in einen Aufnahmeträger in Form eines Erdblocks oder Erdklumpens sicherzustellen.

19. Anlage nach einem der Ansprüche 5 bis 16, **dadurch gekennzeichnet**, das sie Mittel aufweist, um das Einbringen der Pflanze oder der zusammengefassten Pflanzen (6) in einen Aufnahmeträger (32) in Form eines Behälters (33) sicher zu stellen, dessen obere Öffnung durch eine flexible Membran (34) verschlossen ist, die mit einer Mittelöffnung (35) versehen ist.

20. Anlage nach Anspruch 19, **dadurch gekennzeichnet, dass** sie Mittel (38) aufweist, die fähig sind, die Mittelöffnung (35) der flexiblen Membran (34) des Behälters (33) vor dem Einbringen der Stängel (7) der Pflanzen (6) zu öffnen.

## Claims

1. A method for directly inserting the lower end of at least one plant (6) in a receiving support (15, 32), **characterised in that** it comprises:
- maintaining mechanically said grouped plant(s) (6) ,
- maintaining mechanically said receiving support (15, 32) and
- moving automatically and relatively said grouped plant(s) (6), and said receiving support (15, 32) for ensuring insertion of the lower end of said plant(s) in said support.

2. A method according to claim 1, **characterised in that** it comprises maintaining the receiving support (15, 32) facing the lower end of the plant(s) (6) and making relative translation between said plant(s) (6) and said support (15, 32) for ensuring the insertion of said plant(s) in said support.

3. A method according to any one of claims 1 or 2, **characterised in that** it comprises maintaining in fixed position the grouped plant(s) (6) and moving only the support (15, 32), for ensuring insertion of said plant(s) in said support.

4. A method according to any one of claims 1 to 3, **characterised in that** it comprises:
- maintaining in position the grouped plant(s) (6), by resting or clamping the latter to a zone which is situated above their insertion length in the receiving support (15, 32),
- guiding the lower end of said plant(s) for ensuring the correct insertion thereof in said support, said guiding being made on a zone situated on the insertion length of said plant(s) in said support, and
- retracting the guiding means (22-23, 42) once the plant(s) has started to penetrate said support, or as said penetration progresses.

5. An installation for implementing the method according to any one of claims 1 to 4, **characterised in that** it comprises:
- means (2, 16) for maintaining in position the grouped plant(s) (6),
- means (18) for maintaining the receiving support (15, 32) of said grouped plant(s) (6), and
- means (20, 24, 26, 27) for relatively moving said grouped plant(s) (6), and said receiving support (15, 32) for ensuring insertion of the lower end of said plant(s) in said support.

6. An installation according to claim 5, **characterised in that** it comprises means (18) for maintaining the receiving support (15, 32) facing the lower end of the grouped plant(s) (6), and means (20, 24, 26, 27) for ensuring relative translation motion of said grouped plant(s) (6) and of said receiving support (15, 32).

7. An installation according to any one of claims 5 or 6, **characterised in that** it comprises means (2, 16) for maintaining in fixed position the grouped plant(s) (6), and means (18, 20, 24, 26, 27) for moving their receiving support (15, 32).

8. An installation according to claim 7, **characterised in that** the means for maintaining the grouped plant(s) (6) comprise a horizontal, or substantially horizontal, receptacle (2) associated with a retractable pressing device (16) capable of locking said plant(s) (6) on said receptacle (2).

9. An installation according to any one of claims 5 to 8, **characterised in that** it comprises means (22-23, 42) for guiding the lower end of the grouped plant(s) (6), in order to ensure the correct insertion thereof in the receiving support (15, 32).

10. An installation according to claim 9, **characterised in that** it comprises guiding means, i.e. two retractable V-shaped forks (22, 23).

11. An installation according to any one of claims 9 or 10, **characterised in that** it comprises guiding means in the form of pliers (42) formed of two articulated arms (41).

12. An installation according to any one of claims 7 to 11, **characterised in that** the means for maintaining the receiving support (15, 32) are formed of a supporting structure (18) which enables to position said receiving support (15, 32) horizontally or substantially horizontally, facing the receptacle (2) for maintaining the grouped plant(s) (6), which supporting structure (18) is associated with a translation-active pusher (20) for ensuring insertion of said grouped plant(s) (6) in said receiving support (15, 32).

13. An installation according to claim 12, **characterised in that** the supporting structure (18) of the receiving support (15, 32) of the plants (6) is mobile in translation parallel to the movements of the associated pusher (20).

14. An installation according to any one of claims 12 or 13, **characterised in that** it comprises means (29, 30) for automatically supplying the supporting structure (18) with receiving supports (15, 32).

15. An installation according to any one of claims 5 to 14, **characterised in that** it comprises:
- a plurality of horizontal or substantially horizontal receptacles (2) intended for receiving each a plant or a bunch of plants (6), which receptacles (2) are mounted on a stepping driving system (3), and
- at least one station (14) at the level of which are provided means which enable automatic insertion of the plants in their receiving support (15, 32).

16. An installation according to claim 15, **characterised in that** it comprises means (12) for cutting at the appropriate length, the stems (7) of the plants (6) arranged in or on their receptacle (2), which cutting means (12) are provided upstream of the station(s) (14) ensuring automatic insertion of the plants (6) in their receiving support (15, 32).

17. An installation according to any one of claims 5 to 16, **characterised in that** it comprises means for ensuring insertion of the grouped plant(s) (6) in a receiving support in the form of a floral foam block (15)

18. An installation according to any one of claims 5 to 16, **characterised in that** it comprises means for ensuring insertion of the grouped plant(s) (6) in a receiving support in the form of an earth clump block.

19. An installation according to any one of claims 5 to 16, **characterised in that** it comprises means for ensuring insertion of the grouped plant(s) (6) in a receiving support (32) in the form of a container (33) whereof the upper opening is blanked off by a flexible membrane (34) provided with a central orifice (35).

20. An installation according to claim 19, **characterised in that** it comprises means (38) adapted to open the central orifice (35) of the flexible membrane (34) of the container (33), before inserting the stems (7) of plants (6).
